Europäisches Patentamt

European Patent Office

Office européen des brevets

(11) Publication number: **0 340 714**
**A2**

## (12) EUROPEAN PATENT APPLICATION

(21) Application number: **89107916.2**

(22) Date of filing: **02.05.89**

(51) Int. Cl.⁴: **A01G 7/00**

(30) Priority: **04.05.88 IT 2043688**

(43) Date of publication of application:
**08.11.89 Bulletin 89/45**

(84) Designated Contracting States:
**DE ES FR GB**

(71) Applicant: **SOCIETA' AGRICOLA FARANDA S.r.l.**
**Piazza Angonia, 1**
**I-98057 Milazzo (ME)(IT)**

(72) Inventor: **Faranda, Ignazio**
**Piazza Angonia, 1**
**IT-98057 Milazzo (ME)(IT)**

(74) Representative: **Dr. Ing. A. Racheli & C.**
**Viale San Michele del Carso, 4**
**I-20144 Milano(IT)**

(54) Method and device suitable for allowing the rapid development of plants and their vertical or twisted growth.

(57) The proposed method and device foresee subjecting the trunk of a tree to direct traction in an upward direction.

The device consists of a cable, on one end of which an engaging means is provided suitable for acting upon a portion of the trunk, while a weight is attached to the other end of the said cable, a transmission member being provided between the two ends which defines the direction of the tractive force exerted on the said cable.

The cable can act vertically and in the top zone in such a way that the tree grows straight, or laterally at several points so that the tree grows twisted.

FIG. 4

EP 0 340 714 A2

## METHOD AND DEVICE SUITABLE FOR ALLOWING THE RAPID DEVELOPMENT OF PLANTS AND THEIR VERTICAL OR TWISTED GROWTH

The present invention relates to a method and a corresponding device which allow the development of a tree to be increased or its natural development to be modified.

It is known by those skilled in the art how important the rapid development of a tree is, together with its perfectly vertical growth, especially in the case of a tree for wood-working.

In some cases (special trees for landscaping and bonsai) growth is in fact desired which is not straight but twisted or ornamental.

Up to now, the growth of a tree has been increased by improving its environmental conditions and feeding. Its conformation is also modified by guides fixed in the ground or applied to nearby structures. These systems are however expensive and/or require complicated equipment.

Therefore the aim of the present invention is to obtain further growth of the tree, with simple, economical means and without acting upon environmental and feeding conditions.

Another aim is that of modifying the natural trend of its branches and/or trunk.

The above aim has been obtained by exerting traction in an upward direction on the gree. In general it can be reckoned that a force of 0,8 kg is applied for each cm² of its section.

A study in depth has shown that a hazel sapling, for example, if subjected to vertical traction, first undergoes an arrest if not, in fact, a reduction of its height. This reduction corresponds to a greater root development through the well-known phenomenon of cause and effect; in fact, the roots oppose the "uprooting traction".

After a short time, growth resumes and is made more active by the improved root development.

In addition, as the traction persists, the tree develops perfectly in line with the force of traction.

The device consists of a cable, at one end of which is foreseen a means for engaging with the trunk or the branch making up part of the tree, while a weight is attached to the other end, a transmission being foreseen between the two ends, which defines the direction along which the tractive force acts.

The transmission can in particular be a pulley, so that the weight can descend as the tree grows and the traction therefore remain cortstant. Such pulley is fastened to a rigid body.

Preferably the weight will be of between 10 g and 10 kg according to the type of tree, and the cable will have a diameter of between 0,1 and 1 cm.

The method and the device described in the present invention can easily be understood with the aid of the explanation of an embodiment, shown in the enclosed drawings, in which:

Fig. 1 shows a graph representing the growth of two trees exactly alike, one of which is subjected to the process according to the present invention;

Fig. 2 shows the appearance of the two trees at the end of the experiment;

Figs. 3 and 4 show two embodiments of the device used.

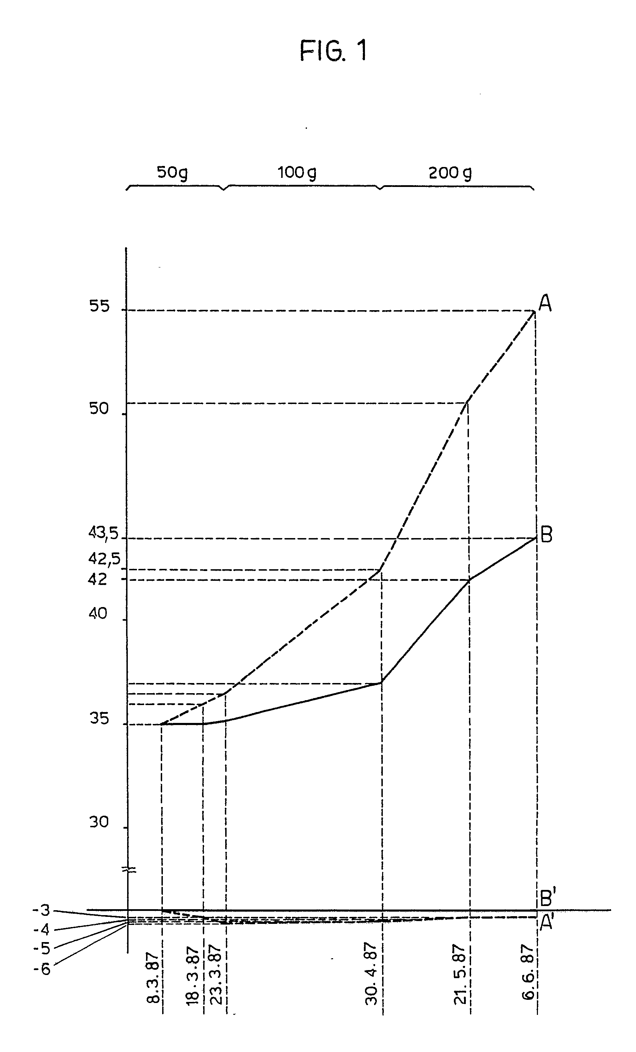

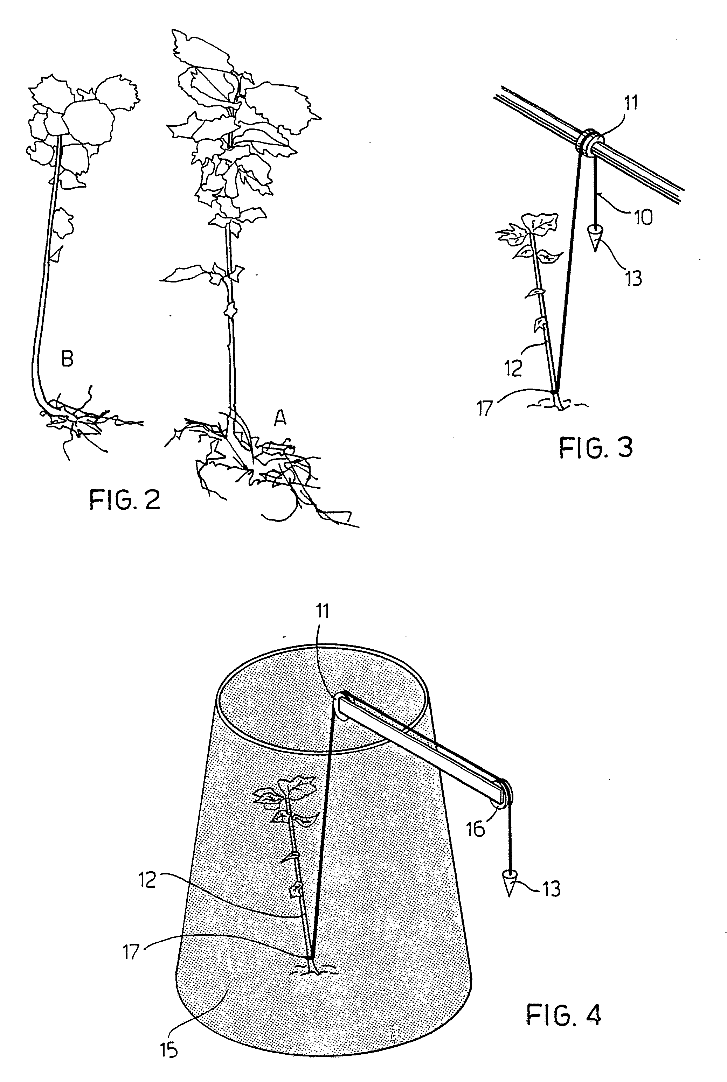

Two trees 35 cm tall are under consideration; tree A is subjected to vertical traction by means of the device in fig. 3 to which three different weights are applied which increase according to the state of growth of the trees. Tree B is left to grow in the identical environmental conditions as tree A, but without intervening outside forces. At point 1 on the graph in fig. 1, the growth of the two trees is equal, in fact they both remain at the same height for a certain time. From point 1 to point 2 tree A begins to develop rapidly (it is subjected to an initial weight of 50 g) while tree B remains at a practically constant height. From point 2 to point 3 it can be seen how the two trees have a completely different growth: tree A grows more in a spurt while tree B grows more gradually. The difference between the development of the two plants is still more evident at the end of the experiment, when tree A is in fact almost 15 cm taller than tree B.

In the negative part of the graph, it is shown how the roots respond to the traction exerted by the weight; at first in fact, in the case of tree A, the trunk goes back into the ground for a few millimeters, while this does not happen in the case of tree B.

The device used (fig. 3) comprises a cable 10 at one end of which is foreseen a means 17 for engaging with a portion of branch or trunk 12 of the tree, while at the other end a weight 13 is fastened. In an intermediate portion of the cable a transmission member 11 is provided, for example in the form of a pulley. Fig. 4 foresees a conical support 15 supporting two transmission members 11 and 16.

The device and the method described in the present invention can also be applied to adult trees. Such action in fact, as well as having a favourable effect on the root system, is conducive to the growth of a straight trunk, thus being a considerable advantage for those trees for woodworking where long lengths are required to be cut.

In addition, the application of such method does not affect running costs and allows a rapid development of the trees to be obtained.

## Claims

1. A device suitable for allowing rapid development of trees and their vertical or twisted growth characterized in that it comprises: a weight (13) of a size which can be varied according to the type and age of the tree; a flexible element (10) suitable for transferring the force of the weight to a portion of trunk (12) or branch of a tree, an engaging means (17) provided at one end of the said flexible element (10) suitable for grasping the said portion of trunk or branch, at least one transmission member (11) such as to define the direction of the tractive force.

2. A device accordig to claim 1, characterized in that the said weight can vary from 10 g to 10 kg.

3. A device according to the previous claims characterized in that the said flexible element (10) is a support cable having a diameter of between 0,1 and 1 cm, according to the weight which it must support.

4. A device according to the previous claims characterized in that the said transmission member is in particular a pulley (11).

5. A method suitable for allowing rapid development of trees and their vertical or twisted growth characterized in that a portion of trunk or branch of a tree is subjected to a certain traction.

6. A method according to claim 5, characterized in that the traction is of about 0,8 kg/cm$^2$ of its section.

7. A method according to claim 5 or 6, characterized in that the said traction is exerted by a weight (13) attached to the end of a cable (10) the other end of which is connected to the portion of the tree towards the top or nearer the ground.

8. A method according to claims 5, 6 or 7, characterized in that the said weight (13) is increased during the period of development of the tree.

# FIG. 1

EP 0 340 714 A2

FIG. 2

FIG. 3

FIG. 4